# EUROPEAN PATENT SPECIFICATION

(11) **EP 3 082 231 B1**
(45) Date of publication and mention of the grant of the patent: **22.05.2019**
(21) Application number: 14869850.9
(22) Date of filing: 08.12.2014
(51) Int. Cl.: H02K 5/22, H02K 37/14

(54) **MOTOR**
MOTOR
MOTEUR

(30) Priority: 13.12.2013 JP 2013258576
(43) Date of publication of application: 19.10.2016
(73) Proprietor: Nidec Sankyo Corporation, Suwa-gun, Nagano 393-8511 (JP)
(72) Inventor: YOKOE, Satoru, Suwa-gun Nagano 393-8511 (JP); ITO, Akihiro, Suwa-gun Nagano 393-8511 (JP)
(74) Representative: Becker Kurig Straus
(86) International application number: PCT/JP2014/082452
(87) International publication number: WO 2015/087841

(56) References cited:
- JP-A- H10 191 616
- JP-A- 2001 145 298
- JP-A- 2002 119 016
- JP-B2- 3 264 573
- US-A1- 2004 056 544
- US-A1- 2005 206 255
- US-A1- 2011 316 374
- US-A1- 2013 194 762

## Description

### [Technical Field]

The present invention relates to a motor.

### [Background Art]

A stator structure of a motor is disclosed in Patent Literature 1.

### [Citation List]

### [Patent Literature]

[Patent Literature 1] Japanese Patent Laid-Open No. 2007-282479

In the stator structure of a motor disclosed in Patent Literature 1, a cover made of resin for accommodating a stator assembly is adopted. The cover is provided with a surrounding wall part which surrounds an outer periphery of the stator assembly. The surrounding wall part is integrally formed with a connector cover made of resin which covers a connector.

An inner side of the cover and an inner side of the connector cover are communicated with each other through an opening part provided in the surrounding wall part. A plurality of coil terminals extended in a radial direction from the stator assembly is connected with corresponding connector terminals on an inner side of the connector cover through a flexible circuit board.

A support member made of resin which supports the connector terminals is disposed on an inner side of the connector cover. A connected part of the circuit board with the connector terminals is connected with the connector terminals by soldering in a contacted state with the support member.

JP 3 264573 B2 discloses a motor serving to avoid the possibility of open circuit of a soldered part, improve the reliability of an electrical connection and facilitate the employment of a general purpose product. In said motor, terminal pins connected to motor driving coils and a connector unit having connector pins are provided and the connector pins are electrically connected to the terminal pins with a flexible printed circuit board.

US 2004/056544 A1 discloses a stator structure of a motor including a stator assembly having a coil bobbin on which coil windings are wound, terminal pins affixed it the coil bobbin, a substrate having a wiring pattern and affixed to the terminal pins, and a connector member that is equipped with connector pins for supplying external power. The connector member is provided independently of the terminal pins. The connector pins of the connector member are electrically connected through the wiring pattern on the substrate to the terminal pins. At least a connection section between the substrate and the terminal pins, a connection section between the substrate and the connector pins, and a part of the connector member are sealed with sealing resin.

US 2011/316374 A1 discloses an actuator including a motor and a case adapted to house the motor. In the actuator, an output shaft of the motor is supported by a structured configured such that an elastic member is disposed between the case and at least one end of the output shaft, wherein the elastic member is in contact with a portion of the case in an engaging manner whereby the elastic member is prevented from shifting relative to the case in the rotation direction of the output shaft, and also wherein the elastic member is in contact with a portion of the motor in an engaging manner whereby a body of the motor is prevented from shifting relative to the elastic member in the rotation direction of the output shaft.

US 2013/194762 A1 discloses a motor control device including a circuit board having a control circuit controlling electric power to be supplied to a motor, a base fixedly supporting the circuit board, a flexible printed circuit supplying electric power to the motor, a pin terminal disposed on the circuit board, being electrically connected with the control circuit, a dummy pin terminal disposed on the circuit board, being electrically free from the control circuit, a wiring pattern land disposed on the FPC, being electrically connected with the pin terminal, and a dummy wiring pattern land disposed on the FPC, being connected with the dummy pin terminal.

US 2005/206255 A1 discloses a spindle motor in which an end portion of a winding of a coil maintains insulation from a base and the end portion of the winding of the coil can be threaded through a hole of a printed circuit board when the end portion of the winding of the coil is drawn out. The spindle motor includes a base fixed with a stator having a coil, an insulating sheet provided between the stator and the base, and a printed circuit board provided in the base on an outer side of the motor. Holes are formed in the base, insulating sheet and printed circuit board so as to communicate with each other, and an winding end portion of the coil is led out to the outside of the motor.

### [Summary of the Invention]

### [Technical Problem]

The support member may be melted due to heat applied when soldering is performed depending on material of the support member and, in this case, support strength for the connector terminals is lowered in the support member.

Therefore, when the connector terminals and the circuit board are connected with each other by soldering, it is required that soldering heat does not affect the support member.

### [Solution to Problem]

The present invention is provided by appended claim 1. Beneficial embodiments are provided in the dependent claims. The following disclosure is provided to facilitate understanding of the present invention. Accordingly, the disclosure provides a motor, in which a coil terminal extended from a stator surrounding a rotor is connected with a connector terminal supported by a terminal support part made of resin through a wiring member in a plate shape having flexibility and, in a connected part of the connector terminal with the wiring member, the connector terminal protruded from the terminal support part penetrates through the wiring member contacted with the terminal support part and is connected by soldering with a face of the wiring member on an opposite side to the terminal support part and, in the motor, a heat insulation member having an insulation property is provided between the terminal support part and the wiring member.

### [Effects of the Invention]

According to the present disclosure, the heat insulation member having an insulation property is provided between the terminal support part and the wiring member and thus influence of soldering heat when the connector terminal and the wiring member are to be connected with each other can be preferably prevented from being applied to the terminal support part.

### [Brief Description of the Drawings]

Fig. 1 is a cross-sectional view showing a valve drive device in accordance with an embodiment of the present disclosure.
Fig. 2 is the X1-X1 cross-sectional view in Fig. 1.
Fig. 3 is an exploded perspective view showing a main part of a valve drive device.
Figs. 4(a) and 4(b) are explanatory views showing a connector cover part of an upper cover member.
Figs. 5(a), 5(b) and 5(c) are explanatory views showing an upper cover member.
Figs. 6(a), 6(b) and 6(c) are explanatory views showing a connector cover part of an upper cover member.
Figs. 7(a) and 7(b) are explanatory views showing a connector part.
Figs. 8(a), 8(b) and 8(c) are explanatory views showing a relationship between a circuit board, a heat insulation member and a connector terminal.
Fig. 9 is an exploded perspective view showing a motor side of a valve drive device.

### [Description of Embodiments]

An embodiment of the present invention will be described in detail below with reference to the accompanying drawings appropriately. The present invention is, as an example, applied to a valve drive device (gear unit) of a valve device structured to open and close a flow passage of refrigerant in a refrigerator.

In the respective drawings, the same reference signs are used in common portions and duplicated explanation is omitted.

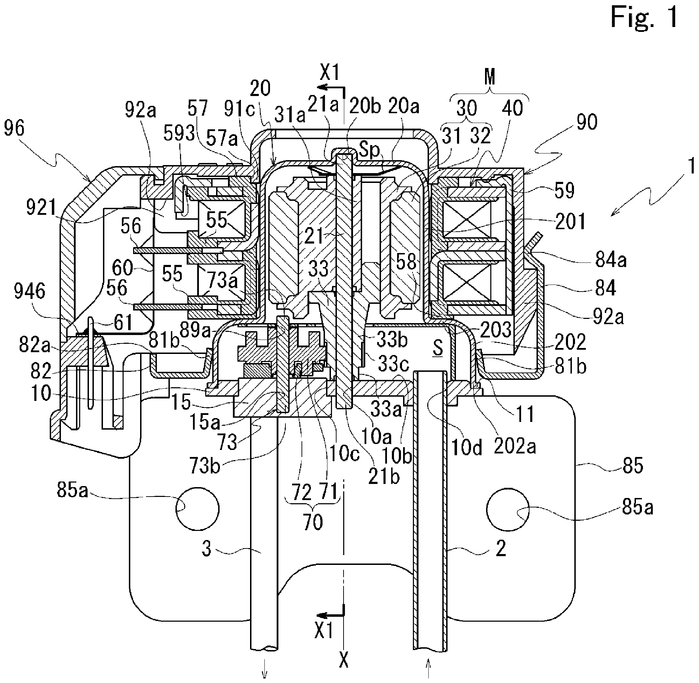

In the following descriptions, a positional relationship of respective structural elements of a valve drive device will be appropriately described in which, with an axial line X of a rotation axis of a rotor 30 of the valve drive device 1 shown in Fig. 1 as a reference, the rotor 30 side in an axial direction of the axial line X is referred to as an upper side and a fluid lead-out pipes 3 and 4 side is referred to as a lower side.

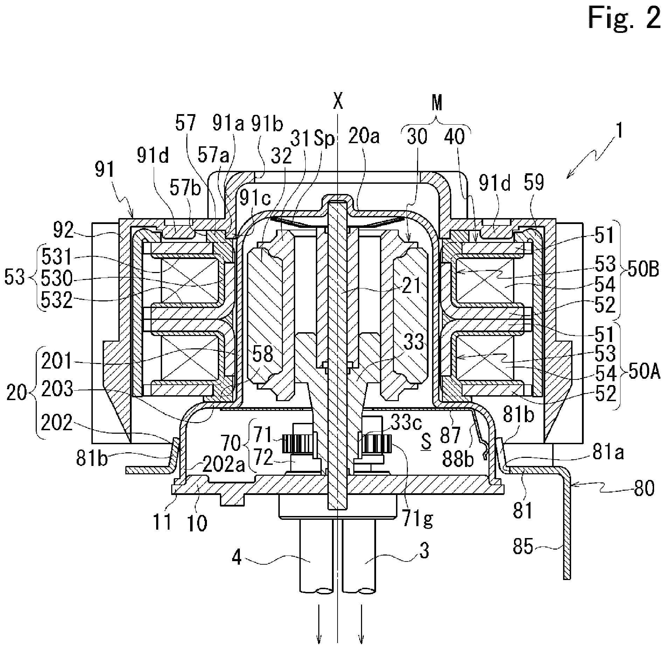

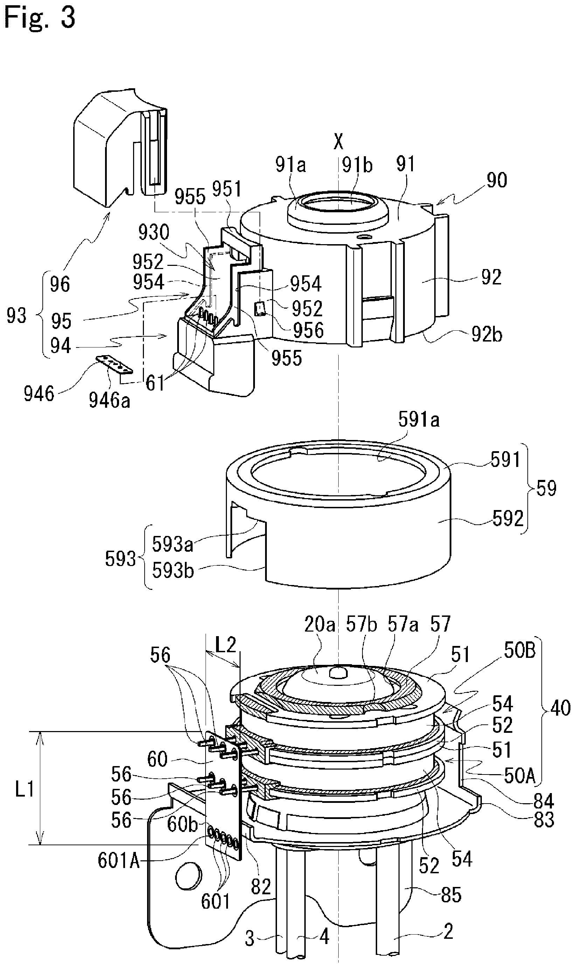

Fig. 1 is a cross-sectional view showing a valve drive device 1 in accordance with an embodiment of the present invention. Fig. 2 is the X1-X1 cross-sectional view in Fig. 1. Fig. 3 is an exploded perspective view showing a motor M side of the valve drive device 1.

In Fig. 3, a portion formed of resin in a stator assembly 40 is indicated by hatching.

As shown in Figs. 1 through 3, a valve drive device 1 in accordance with an embodiment of the present invention is a valve device which structures a flow passage where fluid (in this embodiment, refrigerant) can be circulated through a refrigerator (not shown) that is an external apparatus and is structured to lead out the fluid introduced to an inside of a fluid chamber S from the refrigerator through a fluid lead-in pipe 2 to the refrigerator through fluid lead-out pipes 3 and 4.

In the valve drive device 1, a valve part 70 is driven by a motor M and fluid introduced to the fluid chamber S is led out to the refrigerator side through the fluid lead-out pipes 3 and 4. A claw-pole type stepping motor is adopted as a motor M of the valve drive device 1 in which a pair of stator assemblies 50A and 50B (a coil of an A-phase and a coil of a B-phase) is adjacently disposed in the axial line X direction of the rotation axis of the rotor 30.

In the valve drive device 1, a fluid chamber S is formed between a bottom plate part 10 and a partition 20 by using the partition 20 in a bottomed cylindrical shape which is fixed to an upper face (rotor 30 side face) of the bottom plate part 10.

In the valve drive device 1, the partition 20 is provided so that its bottom part 20a is located at an upper side (rotor 30 side) which is an opposite side to the bottom plate part 10. The partition 20 has an outward form which is enlarged in two steps in a direction separated from the bottom part 20a and is structured of a small diameter part 201 on the bottom part 20a side and a large diameter part 202 on the bottom plate part 10 side.

An outer circumferential edge of the bottom plate part 10 is formed with a step part 11 over its entire periphery to which a tip end 202a of the large diameter part 202 is fitted from an outer side. The partition 20 is fixed to the bottom plate part 10 in a state that the tip end 202a of the large diameter part 202 is fitted to the step part 11.

Further, the valve drive device 1 is used in an arrangement state that a rotor 30 of the motor M is disposed on an upper side and the fluid chamber S is disposed on a lower side (see Fig. 1).

The rotor 30 of the motor M is provided on an inner side of the small diameter part 201 in a state externally fitted on the shaft member 21.

The shaft member 21 in the valve drive device 1 is provided along the axial line X of the rotation axis of the rotor 30. One end 21a of the shaft member 21 is supported by a recessed part 20b of the bottom part 20a and the other end 21b is brazed to a hole part 10a of the bottom plate part 10. The shaft member 21 is provided in a rotation prevented state.

The rotor 30 is rotatably supported by the shaft member 21 and, when the motor M is driven, the rotor 30 is rotated around the axial line X.

The rotor 30 is structured of a base part 31 having a bearing part 31a which is externally fitted on the shaft member 21 and a magnet 32 on which an N-phase and an S-phase are alternately disposed in a circumferential direction around the axial line X.

The magnet 32 is integrally formed with the base part 31 by insert molding when the rotor 30 is molded with resin. The magnet 32 is provided over the entire periphery in the circumferential direction around the axial line X to the base part 31.

A transmission shaft 33 which transmits rotation of the rotor 30 to a valve part 70 described below is inserted between the bearing part 31a and the base part 31 and is fixed to a lower part on the bottom plate part 10 side of the base part 31. The transmission shaft 33 is, similarly to the rotor 30, rotatably supported by the shaft member 21 and is rotated together with the rotor 30 around the axial line X.

The transmission shaft 33 is extended to a lower side on the bottom plate part 10 side along the axial line X and its tip end part 33a is abutted with an upper face 10b of the bottom plate part 10.

In this embodiment, the rotor 30 is urged to a lower side on the bottom plate part 10 side by a spring Sp which is externally fitted to one end 21a side of the shaft member 21. The tip end part 33a of the transmission shaft 33 is always abutted with the upper face 10b of the bottom plate part 10 by an urging force of the spring Sp to position it in the axial direction of the axial line X of the rotor 30.

A large diameter part 33b whose diameter is larger than its tip end part 33a is provided to an upper side (rotor 30 side) of the tip end part 33a of the transmission shaft 33. An outer periphery of the large diameter part 33b is provided with a teeth part 33c which is engaged with a teeth part 71g provided on an outer periphery of a gear 71 described below (see Fig. 2).

As shown in Fig. 2, the small diameter part 201 of the partition 20 which accommodates the rotor 30 is formed in a tube shape surrounding the magnet 32 of the rotor 30 with a predetermined space therebetween. A stator assembly 40 is externally fitted and attached to an outer periphery of the small diameter part 201.

In this embodiment, a circular plate part 203 connecting the small diameter part 201 with the large diameter part 202 is provided so as to be perpendicular to the axial line X. The stator assembly 40 externally fitted to the small diameter part 201 is positioned by the circular plate part 203 and two stator assemblies 50A and 50B are disposed to an outer side in a radial direction of the rotor 30 (magnet 32).

The magnet 32 of the rotor 30 is driven by magnetic force from the stator assembly 40 described below through the partition 20 and thus the partition 20 is structured of non-magnetic material. Further, the partition 20 is structured of metal so as to withstand pressure in the fluid chamber S. Therefore, the partition 20 is structured of stainless steel which is nonmagnetic metal.

As shown in Fig. 2, the stator assembly 40 includes two stator assemblies 50A and 50B which are disposed so as to be superposed on each other in the axial direction of the axial line X. An outer stator core 59 which surrounds outer peripheries of the stator assemblies 50A and 50B is externally fitted and attached in the stator assembly 40.

The outer stator core 59 is, similarly to inner stator cores 51 and 52 described below, formed of a plate body of a magnetic body by press working. When externally fitted and attached to the stator assemblies 50A and 50B, the outer stator core 59 and the inner stator cores 51 and 52 are provided in a contacted state with each other to structure magnetic paths by the outer stator core 59 and the inner stator cores 51 and 52.

Each of the stator assemblies 50A and 50B is basically structured so that a drive coil 54 wound around an outer periphery of a bobbin 53 is disposed between a pair of inner stator cores 51 and 52 disposed with a space therebetween in the axial direction.

In the stator assembly 40, the bobbin 53 is a resin molded body (insulator) in which the inner stator cores 51 and 52 of the stator assemblies 50A and 50B are embedded in its inside by insert molding and is integrally formed with a terminal holding part 55 described below.

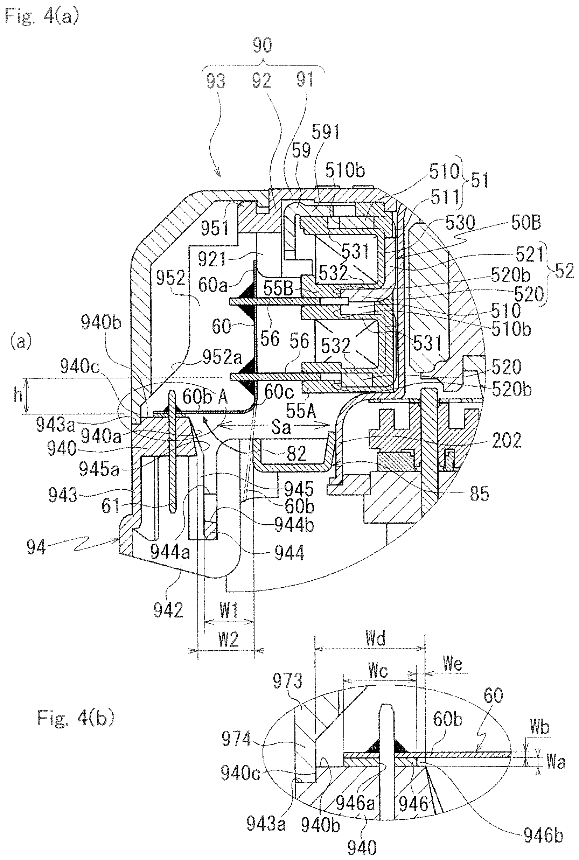

Fig. 4(a) is an enlarged cross-sectional view showing a main part in Fig. 1 and Fig. 4(b) is an enlarged view showing an area A in Fig. 4(a).

As shown in Fig. 4(a), the inner stator cores 51 and 52 are provided with ring-shaped flange parts 510 and 520 disposed in a posture perpendicular to the axial line X and a plurality of pole teeth 511 and 521 which are formed so as to be stood up in the axial line X direction from inner peripheries of the flange parts 510 and 520. The pole teeth 511 and 521 are provided on inner diameter sides of the flange parts 510 and 520 at equal intervals in the circumferential direction around the axial line X.

A pair of the inner stator cores 51 and 52 of the stator assemblies 50A and 50B is disposed in a posture that respective pole teeth 511 and 521 are faced each other so that the pole teeth 511 of one inner stator core 51 and the pole teeth 521 of the other inner stator core 52 are alternately and adjacently disposed to each other in the circumferential direction around the axial line X.

A base part 530 in a cylindrical shape of the bobbin 53 whose outer periphery is wound with a coil is located on an outer side in a radial direction of the pole teeth 511 and 521. Flange parts 531 and 532 extended to an outer side in the radial direction are provided at both ends of the base part 530 in the axial direction of the axial line X over the entire periphery in the circumferential direction around the axial line X.

As shown in Fig. 2, in the stator assembly 40, the inner stator core 51 of the stator assembly 50A and the inner stator core 52 of the stator assembly 50B are provided in a state that the flange parts 510 and 520 (see Fig. 4(a)) are contacted with each other in the axial direction of the axial line X.

The flange parts 510 and 520 are held in the resin in a state that the flange parts 510 and 520 are contacted with each other without a gap space.

In the stator assembly 40 in which the inner stator cores 51 and 52 are embedded, pole teeth 511 and 521 are exposed on an inner diameter side of the base part 530 of the bobbin 53. Faces on the drive coil 54 side of the flange parts 510 and 520 are covered with resin structuring the flange parts 531 and 532.

In the stator assembly 40, a ring-shaped attaching part 57 (see Figs. 2 and 3) is formed by using resin material covering an upper face on an inner diameter side of the flange part 510 of the stator assembly 50B. A fitting wall 91c of an upper cover member 90 described below is internally fitted and attached to the attaching part 57.

Further, a ring-shaped abutting part 58 (see Fig. 2) is formed by using resin material covering an under face on an inner diameter side of the flange part 520 of the stator assembly 50A. The abutting part 58 is abutted with the circular plate part 203 at a boundary between the small diameter part 201 and the large diameter part 202 when the stator assembly 40 is externally fitted to the small diameter part 201 of the partition 20 in the axial line X direction. Therefore, positioning in the axial direction of the stator assembly 40 is performed by the abutting part 58 which is abutted with the circular plate part 203.

As shown in Fig. 4(a), the flange parts 510 and 520 of the respective stator cores are formed with cut-out parts 510b and 520b which are recessed to the axial line X side at parts of their outer peripheral parts. The cut-out parts 510b and 520b of the respective flange parts 510 and 520 are provided at a position overlapped with each other viewed in the axial direction of the axial line X. In this embodiment, a terminal holding part 55 is provided by utilizing the portions of the cut-out parts 510b and 520b.

The terminal holding part 55B of the stator assembly 50B is provided so as to straddle over the cut-out parts 510b and 520b of the flange parts 510 and 520.

The terminal holding part 55B is integrally formed with the flange parts 532 and 531 of the bobbin 53 which are located on both sides of the flange parts 510 and 520 and has a predetermined thickness in the axial direction of the axial line X.

A terminal holding part 55A of the stator assembly 50A is provided in the cut-out part 520b of the flange part 520 of the inner stator core 52.

The terminal holding part 55A is integrally formed with the flange part 532 of the bobbin 53 of the stator assembly 50A and has a predetermined thickness in the axial direction of the axial line X.

The terminal holding part 55A of the stator assembly 50A and the terminal holding part 55B of the stator assembly 50B are provided with a space therebetween in the axial line X direction.

A plurality of coil terminals 56 is press-fitted and supported by the terminal holding parts 55A and 55B of the stator assemblies 50A and 50B. A plurality of the coil terminals 56 is provided so as to be protruded to an outer side in the radial direction from the stator assembly 40 and base ends of the coil terminals 56 are located in the cut-out parts 510b and 520b.

Therefore, the outer stator core 59 which is externally fitted and attached to the stator assembly 40 is provided with a cut-out part 593 (see Fig. 3) in a surrounding wall part 592 which surrounds the outer peripheries of the stator assemblies 50A and 50B for avoiding an interference with the coil terminals 56. In addition, a surrounding wall part 92 of an upper cover member 90 described below is also provided with an opening part 92a for avoiding an interference with the coil terminals 56 (see Fig. 1).

The outer stator core 59 is, as shown in Fig. 3, formed in a bottomed cylindrical shape and is provided with an opening 591a at a center part of the bottom part 591 so that the bottom part 20a of the partition 20 can be inserted. A surrounding wall part 592 which is provided over the entire periphery of the bottom part 591 is formed in a cylindrical shape which surrounds over the entire periphery of the flange parts 510 and 520 of the stator assemblies 50A and 50B.

As shown in Fig. 4(a), the coil terminal 56 is a conductive pin which is formed in a bar shape extended in a straight shape. The coil terminals 56 are penetrated through the opening part 92a provided in the upper cover member 90 and their tip end sides are located in an inside of a connector cover part 93 (accommodation part 95).

In this embodiment, end parts (not shown) of a winding coil extended from the drive coil 54 (coil of A-phase) of the stator assembly 50A are bound to terminal holding part 55A sides of the coil terminals 56 held by the terminal holding part 55A, and end parts (not shown) of a winding coil extended from the drive coil 54 (coil of B-phase) of the stator assembly 50B are bound to terminal holding part 55B sides of the coil terminals 56 held by the terminal holding part 55B.

The respective coil terminals 56 supported by the terminal holding parts 55A and 55B are respectively connected with corresponding connector terminals 61 through a common flexible circuit board 60 (hereinafter, also referred to as a circuit board 60) structured of polyimide resin. Each of the coil terminals 56 is connected by soldering with a corresponding wiring line of wiring lines provided on the circuit board 60 on a face of the circuit board 60 opposite to the drive coil 54.

As shown in Figs. 1 through 3, an upper cover member 90 is a member accommodating the stator assembly 40 and the outer stator core 59 of the motor M and is integrally formed with a cover part 91 covering an upper face of the stator assembly 40 and a surrounding wall part 92 which surrounds an outer periphery of the outer stator core 59. The surrounding wall part 92 is integrally formed with a connector cover part 93.

The upper cover member 90 is formed of mixed resin of polycarbonate and ABS resin by resin molding.

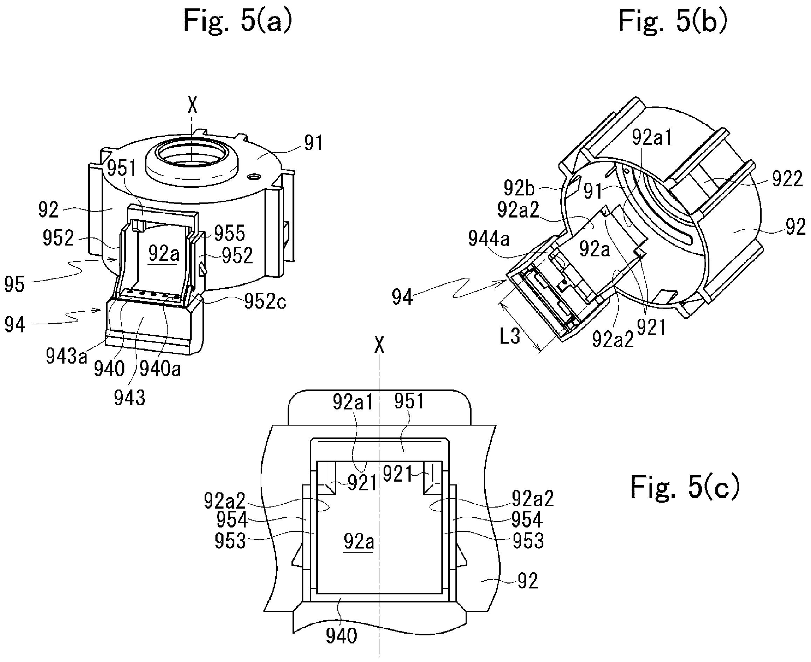

Figs. 5(a), 5(b) and 5(c) are explanatory views showing the connector cover part 93 of the upper cover member 90. Fig. 5(a) is a perspective view showing a connector part 94 and an accommodation part 95 of the connector cover part 93 which are viewed from an obliquely right upper side. Fig. 5(b) is a perspective view showing the connector part 94 and the accommodation part 95 which are viewed from an obliquely lower side, and Fig. 5(c) is a view showing the accommodation part 95 viewed in a radial direction.

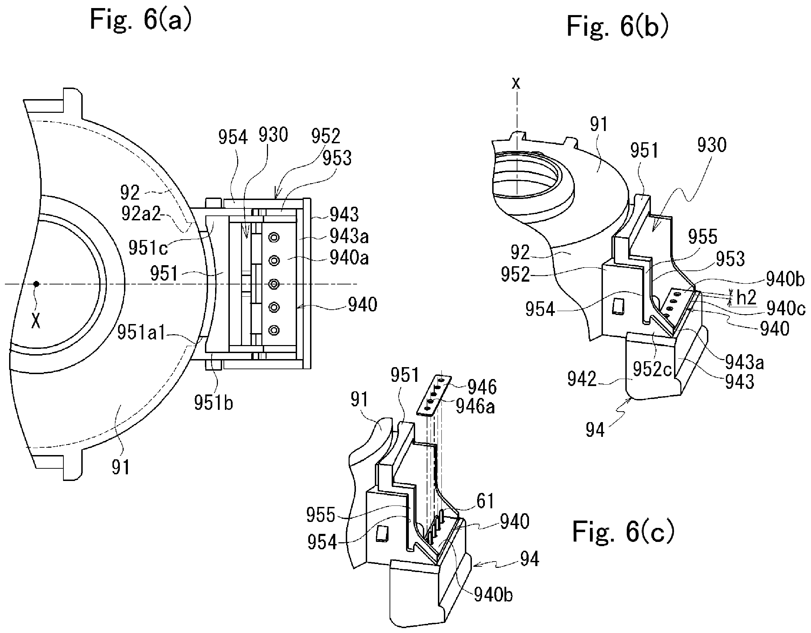

Figs. 6(a), 6(b) and 6(c) are explanatory views showing the connector cover part 93. Fig. 6(a) is a view which is viewed from an upper side in the axial line X direction, Fig. 6(b) is its perspective view, and Fig. 6(c) is an explanatory view showing attachment of a heat insulation member 946 to a terminal support part 940 of the connector cover part 93.

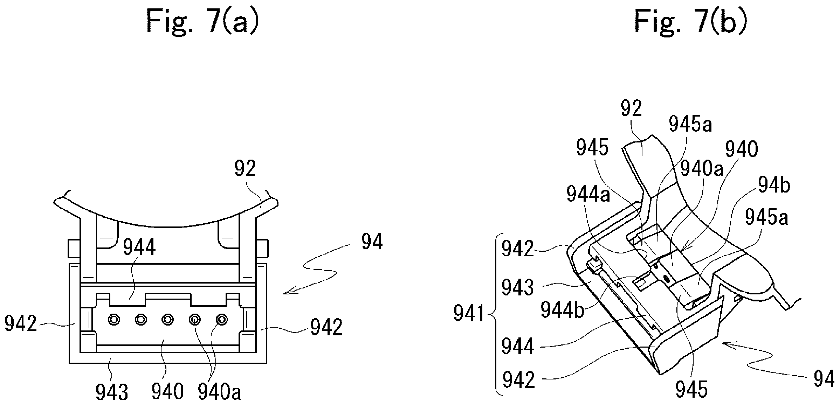

Figs. 7(a) and 7(b) are explanatory views showing the connector part 94. Fig. 7(a) is a view which is viewed from a lower side in the axial line X direction and Fig. 7(b) is a perspective view which is viewed from an obliquely lower side in the axial line X direction.

As shown in Figs. 5(a), 5(b) and 5(c), the surrounding wall part 92 of the upper cover member 90 is formed in a ring shape when viewed in the axial direction of the axial line X. In the valve drive device 1, the surrounding wall part 92 is provided so as to surround an outer periphery of the outer stator core 59.

A lower end 92b (see Fig. 3) of the surrounding wall part 92 is located on a lower side in the axial line X direction (fluid lead-out pipes 3 and 4 side) with respect to the coil terminals 56 and the drive coils 54 disposed on an inner side of the upper cover member 90 and the connector cover part 93. Therefore, water splashed on the surrounding wall part 92 is preferably prevented from reaching to conductive parts such as the coil terminals 56 and the drive coils 54.

In the surrounding wall part 92, when viewed in the radial direction, an area interfering with the coil terminals 56 described above is cut out. The cut-out area is the opening part 92a where the coil terminals 56 extended in the radial direction from the stator assembly 40 are passed through.

In the surrounding wall part 92, the opening part 92a is formed in a height range from a lower end of the surrounding wall part 92 to the vicinity of the cover part 91 (see Fig. 5(b)). An upper side 92a1 of the opening part 92a is extended in parallel to the cover part 91 at a position offset from the cover part 91 to a lower side (fluid lead-out pipes 3 and 4 side).

Both sides 92a2 and 92a2 of the opening part 92a in the circumferential direction of the surrounding wall part 92 are extended in a straight shape along the axial line X and the opening part 92a is formed in a substantially rectangular shape when viewed in the radial direction (see Fig. 5(c)).

In the opening part 92a, a protruded part 921 is provided at both side parts of the upper side 92a1 so as to protrude to an outer side in the radial direction. The circuit board 60 described above is abutted with the protruded parts 921 from an outer side in the radial direction (see Fig. 1). Positioning in the radial direction of the circuit board 60 is performed by the protruded parts 921.

The surrounding wall part 92 of the upper cover member 90 is provided with an engaged part 922 with which an engaging arm 84 of a lower cover member 80 described below is engaged at a position opposite to the opening part 92a interposing the axial line X.

The upper cover member 90 is integrally formed with the connector part 94 and the accommodation part 95 of the connector cover part 93.

As shown in Fig. 3, the surrounding wall part 92 of the upper cover member 90 is provided with the connector cover part 93 covering the opening part 92a on an outer side in the radial direction of the opening part 92a.

The connector cover part 93 includes a connector part 94, which is extended to a lower side (fluid lead-out pipes 3 and 4 side) from an outer side in the radial direction of the surrounding wall part 92 and is located on a lower side (fluid lead-out pipes 3 and 4 side) with respect to the opening part 92a, the accommodation part 95 accommodating the circuit board 60 which connects the connector terminals 61 provided in the connector part 94 with the coil terminals 56, and a cap 96 which closes an opening 930 of the accommodation part 95.

As shown in Fig. 4(a), the connector part 94 is provided with a terminal support part 940 at a position to an outer side in the radial direction of the large diameter part 202. In the terminal support part 940, a plurality of the connector terminals 61 is provided so as to be separated from each other in the circumferential direction around the axial line X (see Fig. 3).

Each of the connector terminals 61 is provided so as to penetrate through the terminal support part 940 in its thickness direction (axial line X direction). When viewed in the radial direction, each of the connector terminals 61 is located on a lower side with respect to the coil terminals 56 and is provided in a posture substantially perpendicular to the coil terminals 56.

Each of the connector terminals 61 is connected with the corresponding coil terminal 56 through the circuit board 60. Each of the connector terminals 61 is connected with a land 601A of a corresponding wiring line by soldering formed so as to surround a terminal hole 601 in wiring lines provided in the circuit board 60 on a face of the circuit board 60 opposite to the terminal support part 940.

In this embodiment, each of the connector terminals 61 is connected with the corresponding wiring line by soldering in a state that the connector terminal 61 is inserted into the circular terminal hole 601 provided on one side of the circuit board 60.

Connected parts (soldered parts) of the connector terminals 61 with the circuit board 60 are provided at positions offset to a lower side (terminal support part 940 side) by a distance of a predetermined height h in the axial line X direction from connected parts (soldered parts) of the coil terminals 56 with the circuit board 60. Further, in the circuit board 60 connecting the coil terminals 56 with the connector terminals 61, its one end part 60a side is extended in a direction along the axial line X and its the other end part 60b side is extended in a direction along a perpendicular direction to the axial line X with a curved part 60c as a boundary. The circuit board 60 is curved in a substantially L shape when viewed from a side face of the circuit board 60 (see Fig. 4(a)).

Therefore, restoring force in a direction for returning the circuit board 60 to an original shape is acted on the connected part (the other end part 60b) side of the circuit board 60 with the connector terminals 61. The other end part 60b side of the circuit board 60 is pressed against an upper face of the terminal support part 940 (support face 940b for the circuit board 60) by the restoring force.

In this embodiment, the support face 940b is a flat face which is perpendicular to the axial line X and the heat insulation member 946 having an insulation property is provided between the support face 940b and the circuit board 60 (see Fig. 4(b)).

The heat insulation member 946 is a member for restraining the connector terminals 61 supported by the terminal support part 940 from being inclined due to heat by which the terminal support part 940 may be softened when the circuit board 60 is soldered with the connector terminals 61.

The heat insulation member 946 is a plate-shaped member formed in a rectangular shape (see Fig. 6(c)) and is structured of glass epoxy.

The heat insulation member 946 is provided with a thickness Wa which is thicker than a thickness Wb of the circuit board 60 (see Fig. 4(b)) and a plurality of through-holes 946a penetrating through the heat insulation member 946 in its thickness direction is provided in a longitudinal direction of the heat insulation member 946 with spaces therebetween.

In this embodiment, the connector terminals 61 protruded from the terminal support part 940 are penetrated through the through-holes 946a of the heat insulation member 946 and are extended to an upper side. The heat insulation member 946 is disposed at a predetermined position of an upper face (face on the coil terminal 56 side) of the terminal support part 940 by the connector terminals 61 penetrated through the through-holes 946a.

The heat insulation member 946 is formed so that its width Wc is smaller than a width Wd in the radial direction of the terminal support part 940. A side face 946b on an inner diameter side of the heat insulation member 946 is disposed at a position separated from an inclined face 940a on an inner diameter side of the terminal support part 940 to an outer side in the radial direction by a predetermined distance We.

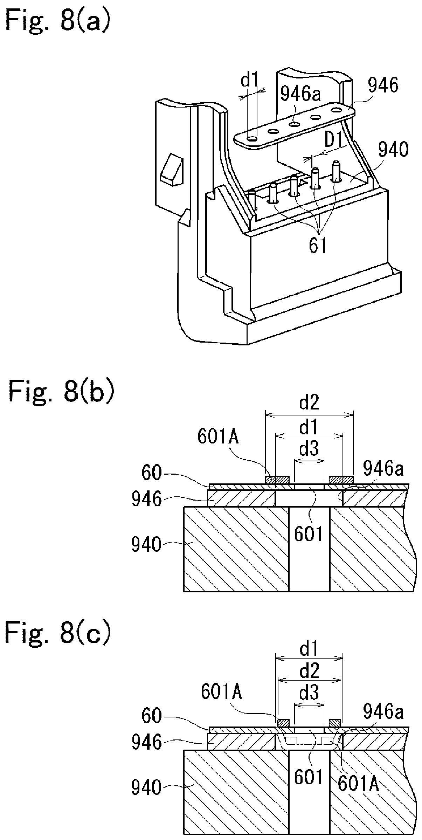

Fig. 8(a) is an exploded perspective view showing the heat insulation member 946 and the terminal support part 940 which are viewed from an obliquely upper side. Fig. 8(b) is a cross-sectional view showing the circuit board 60, the heat insulation member 946 and a part of the terminal support member 940 which are viewed from an outer side in the radial direction in a case that an inner diameter d1 of the through-hole 946a of the heat insulation member 946 is smaller than an outer diameter d2 of the land 601A of the circuit board 60. Fig. 8(c) is a cross-sectional view showing the circuit board 60, the heat insulation member 946 and a part of the terminal support member 940 which are viewed from an outer side in the radial direction in a case that the inner diameter d1 of the through-hole 946a of the heat insulation member 946 is larger than the outer diameter d2 of the land 601A of the circuit board 60.

In Figs. 8(b) and 8(c), the connector terminal 61 is not shown.

As shown in Fig. 8(a), the inner diameter d1 of the through-hole 946a of the heat insulation member 946 is larger than the diameter D1 of the connector terminal 61 and is formed to be smaller than two times of the diameter D1 (D1 < d1 < 2 x D1). Therefore, the heat insulation member 946 is positioned by inserting the connector terminals 61 into the through-holes 946a.

In addition, as shown in Fig. 8(b), the inner diameter d1 of the through-hole 946a of the heat insulation member 946 is preferably formed to be smaller than the outer diameter d2 of the land 601A formed around the terminal hole 601 of the circuit board 60. According to this structure, when the circuit board 60 is to be soldered with the connector terminal 61, the circuit board 60 is prevented from being deformed and got into the through-hole 946a of the heat insulation member 946 by a pressing force in a direction toward the heat insulation member 946 due to soldering and can be prevented from contacting with the terminal support member 940 (see the dotted line in Fig. 8(c)).

Therefore, according to this structure, soldering heat is prevented from being directly transmitted to the terminal support member 940 through the circuit board 60 and thus the terminal support member 940 can be prevented from being softened by the heat and inclination of the connector terminal 61 can be preferably prevented.

The connector terminals 61 which are penetrated through the heat insulation member 946 and are extended to an upper side (face on the rotor 30 side) are penetrated through the other end part 60b side of the circuit board 60. The tip end sides of the connector terminals 61 are soldered on a face of the circuit board 60 on an opposite side to the terminal support part 940.

In this embodiment, the heat insulation member 946 structured of glass epoxy whose melting temperature is higher than the terminal support part 940 is intervened between the circuit board 60 and the terminal support part 940. Therefore, heat of about 350°C gen erated at the time of soldering is prevented from transmitting to the terminal support part 940 made of mixed resin of polycarbonate and ABS resin and thereby the terminal support part 940 is prevented from being melted by the soldering heat.

If the terminal support part 940 is melted by heat, the connector terminals 61 supported by the terminal support part 940 may be inclined and, in this case, a problem may occur in connection of a mating connector (not shown) with the connector terminals 61.

In this embodiment, the thickness Wa of the heat insulation member 946 is set to be thicker than the thickness Wb of the circuit board 60. This is because the heat at the time of soldering is prevented from being transmitted to the terminal support part 940 side. Further, the heat insulation member 946 is structured of material having an insulation property and thereby adjacent connector terminals 61 are prevented from being short-circuited through the heat insulation member 946.

As shown in Fig. 7(b), the terminal support part 940 is provided with a surrounding wall part 941 which surrounds outer peripheries of the connector terminals 61 protruded to a lower side (the fluid lead-out pipes 3 and 4 side) from the terminal support part 940. The surrounding wall part 941 is structured of side wall parts 942 and 942 provided on both sides in a longitudinal direction of the terminal support part 940, an outer wall part 943 provided along a side edge on an outer side in the radial direction of the terminal support part 940, and an inner wall part 944 provided along a side edge on an inner side in the radial direction.

A cut-out part 944a is formed which is cut out so as to leave two connecting beams 945 and 945 with the terminal support part 940 on an inner diameter side of the inner wall part 944 (obliquely right upper side in Fig. 7(b)). The cut-out part 944a is provided with a width L3 (see Fig. 5(b)) which is larger than a width L2 (see Fig. 3) of the circuit board 60.

As shown in Fig. 7(b), an engaging part 944b for engaging with an engagement projection (not shown) of a mating connector is provided at a center in a width direction of the cut-out part 944a.

The connecting beams 945 and 945 are formed in a substantially rectangular shape when viewed from the axial line X side (inner diameter side) and are provided along an attaching and detaching direction of the mating connector to the connector part 94.

The connecting beams 945 and 945 are provided so as to connect the inner wall part 944 with side edges on an inner diameter side of the terminal support part 940 for reinforcing the inner wall part 944 against a force applied to the engaging part 944b when the mating connector is to be pulled out. A force applied to the engaging part 944b (inner wall part 944) when the mating connector is to be pulled out can be transmitted (released) to the terminal support part 940 side and thus stress is prevented from being concentrated on a connected part between the inner wall part 944 and the side wall part 942 and the connected part is prevented from being broken.

In the connector part 94 in this embodiment, the connecting beams 945 and 945 are provided and thus, even when the side wall parts 942 and 942 are disposed in a separated state from each other, a sufficient strength can be secured. Therefore, the width L3 of the cut-out part 944a (see Fig. 5(b)) can be set larger than the width L2 of the circuit board 60 (see Fig. 3).

A connected part of the connecting beam 945 with the terminal support part 940 is provided with an inclined face 945a in which thickness of the connecting beam 945 becomes thinner toward the support face 940b side for the circuit board 60 (upper side in Fig. 4(a)) of the terminal support part 940.

In addition, a side face of the terminal support part 940 exposed in the cut-out part 944a is provided with an inclined face 940a which is inclined in a similar direction to the inclined face 945a.

Therefore, as shown in Fig. 4(a), the space W1 between the connecting beam 945 and a reinforcing wall 82 of an attaching part 85 described below and the space W2 between the terminal support part 940 and the reinforcing wall 82 are set to be wider toward an upper side of the upper cover member 90.

In this embodiment, the outer stator core 59 and the upper cover member 90 are assembled in this order to the stator assembly 40 in which the circuit board 60 is soldered to the coil terminals 56 (see Fig. 3). In the connector cover part 93, a space Sa is secured to an inner diameter side of the terminal support part 940 for avoiding an interference with the coil terminals 56 and the circuit board 60 (see Fig. 4(a)).

The other end part 60b of the circuit board 60 is located at a position as shown by the dotted line in Fig. 4(a) just after the upper cover member 90 has been assembled. Therefore, it is required that the other end part 60b side is curved to an outer side in the radial direction from this state (see the arrow in the drawing) and that the terminal holes 601 (see Fig. 3) provided in the other end part 60b are engaged with the connector terminals 61 which are protruded to an upper side (cap 96 side) from an upper face (support face 940b) of the terminal support part 940.

In accordance with an embodiment of the present invention, it is preferable that an inner diameter d3 of the terminal hole 601 provided in the other end part 60b of the circuit board 60 is the same as an inner diameter d1 of the through-hole 946a of the heat insulation member 946 and is formed to be larger than a diameter D1 of the connector terminal 61 supported by the terminal support part 940 but smaller than a diameter of two times of the diameter D1 (see Fig. 8(b)).

However, the reinforcing wall 82 of the attaching part 85 described below is located to an inner diameter side of the terminal support part 940 and thus, in a case that a space between the reinforcing wall 82 and the terminal support part 940 is small, the entire circuit board 60 is required to be curved largely when the other end part 60b side of the circuit board 60 is to be curved and thus a bending radius of the circuit board 60 becomes small.

Therefore, a length L1 in a longitudinal direction of the circuit board 60 (see Fig. 3) is required to make longer to give a margin for the length L1 of the circuit board 60.

In this embodiment, the terminal support part 940 side of the inner wall part 944 is cut out and an inner diameter side of the terminal support part 940 is exposed in an inside of the cut-out part 944a and, in this manner, the space Sa to the inner diameter side of the terminal support part 940 is widened.

In addition, the connecting beam 945 and the terminal support part 940 are respectively provided with the inclined faces 945a and 940a to widen the space to the reinforcing wall 82 and, in the support face 940b of the terminal support part 940, the connector terminals 61 are located in the vicinity of the inclined faces 945a and 940a.

Therefore, in comparison with a case that the cut-out part 944a is not provided, the length L I in the longitudinal direction of the circuit board 60 can be shortened and, when the circuit board 60 is to be curved, a bending radius of the circuit board 60 can be increased.

Further, the inclined faces 940a and 945a are provided and thus the space is enlarged by amounts of the inclined faces 940a and 945a. Therefore, while the inclined faces 940a and 945a are functioned as a guide when the circuit board 60 is to be curved, a bending radius of the circuit board 60 when the circuit board 60 is to be curved can be enlarged.

Further, the inner wall part 944 is provided with the cut-out part 944a and thus the length L1 of the circuit board 60 can be shortened. Therefore, in a state that the other end part 60b side of the circuit board 60 is bent at a substantially 90 degrees with respect to the one end part 60a side, the curved part 60c of the circuit board 60 can be disposed at a position separated from the metal reinforcing wall 82.

In this embodiment, as described above, the side face 946b on an inner diameter side of the heat insulation member 946 is disposed at a position separated by a predetermined distance We to an outer side in the radial direction from the inclined face 940a on an inner diameter side of the terminal support part 940. Therefore, when the other end part 60b side of the circuit board 60 is to be curved to an outer side in the radial direction (see the arrow in Fig. 4(a)), the other end part 60b is not caught by the heat insulation member 946. This is because that, if the other end part 60b of the circuit board 60 is caught by the heat insulation member 946, the heat insulation member 946 is lifted up by the circuit board 60 and may be come off from the connector terminals 61.

As shown in Figs. 5(a), 5(b) and 5(c), the accommodation part 95 of the connector cover part 93 is adjacently provided to an upper side of the connector part 94. The accommodation part 95 is provided with an upper wall part 951 formed along an upper side 92a1 of the opening part 92a of the surrounding wall part 92 and side wall parts 952 and 952 formed along vertical sides 92a2 of the opening part 92a.

The upper wall part 951 and the side wall parts 952 and 952 are protruded to an outer side in the radial direction from an outer peripheral face of the surrounding wall part 92 and are provided so as to surround the upper side and the both vertical sides of the opening part 92a provided in the surrounding wall part 92 when viewed in the radial direction for the axial line X.

The side wall parts 952 and 952 are provided over the total lengths of the vertical sides 92a2 of the opening part 92a and their upper end parts are connected with both end parts in a longitudinal direction of the upper wall part 951.

As shown in Fig. 6(b), a lower end part side of the side wall part 952 is protruded in a direction separated from the surrounding wall part 92 toward a lower side (fluid lead-out pipes 3 and 4 side). The terminal support part 940 is integrally connected with a lower end of the protruded portion (protruded part 952c).

Therefore, the connector part 94 having the terminal support part 940 is held by the side wall parts 952 and 952 at a position separated to an outer side in a radial direction from the outer periphery of the surrounding wall part 92. Further, the protruded parts 952c on the lower end side of the side wall parts 952 and 952 function as ribs which secure support strength for the terminal support part 940.

When a portion provided with the terminal support part 940 is viewed in the radial direction for the axial line X, a peripheral wall (surrounding wall) surrounding the opening part 92a of the surrounding wall part 92 is formed by the terminal support part 940, the upper wall part 951 and the side wall parts 952 and 952.

In addition, outer side faces of the side wall parts 952 in a circumferential direction around the axial line X are formed with step parts 954 at a position offset to an inner side from the outer peripheral part 953 of the side wall part 952. The outer peripheral part 953 side of the side wall part 952 with respect to the step part 954 is formed as an inner side fitting wall part 955 to which a fitting wall part of the cap 96 is fitted.

The terminal support part 940 connected with lower ends of the side wall parts 952 is disposed in a posture that its upper face (support face 940b) is perpendicular to the axial line X. The support face 940b of the terminal support part 940 is located by a predetermined height h2 on an upper side of the cover part 91 side (cap 96 side) with respect to the upper end 943a of the outer wall part 943 of the connector part 94 (see Fig. 6(b)).

Therefore, when the opening 930 of the connector cover part 93 is viewed from an outer side in the radial direction for the axial line X, the terminal support part 940 is protruded in an inside of the opening 930 and a side edge 940c on the outer diameter side of the terminal support part 940 can be visually observed from an outer side in the radial direction.

In addition, the terminal support part 940 is, as described above, disposed at a position separated to an outer side in the radial direction from the surrounding wall part 92, and the upper face of the terminal support part 940 (support face 940b) can be also visually observed from an upper side of the opening 930 (cap 96 side).

As described above, in this embodiment, the heat insulation member 946 is disposed at a predetermined position on the upper face (support face 940b) of the terminal support part 940 by the connector terminals 61 which are penetrated through the through-holes 946a.

In this case, the terminal support part 940 is not provided with a wall or the like for obstructing access to the terminal support part 940 on its outer side in the radial direction and on its upper side and thus attachment of the heat insulation member 946 to the terminal support part 940 can be easily performed.

Specifically, the upper cover member 90 is not formed on an outer side in the radial direction over a region from a side edge 940c of the terminal support part 940 to a position of the upper wall part 951 provided along the upper side 92a1 of the opening part 92a of the surrounding wall part 92. Therefore, an obstructive member is not existed when the heat insulation member 946 is to be attached to the terminal support part 940 and thus the heat insulation member 946 can be easily attached to the terminal support part 940.

The side edge 940c of the terminal support part 940 is located on an inner side in the radial direction relative to the outer wall part 943 on the outer diameter side of the connector part 94 and is formed as an abutting face with which an abutting part 974 of the cap 96 described below is abutted.

Next, the valve part 70 driven by the motor M will be described below.

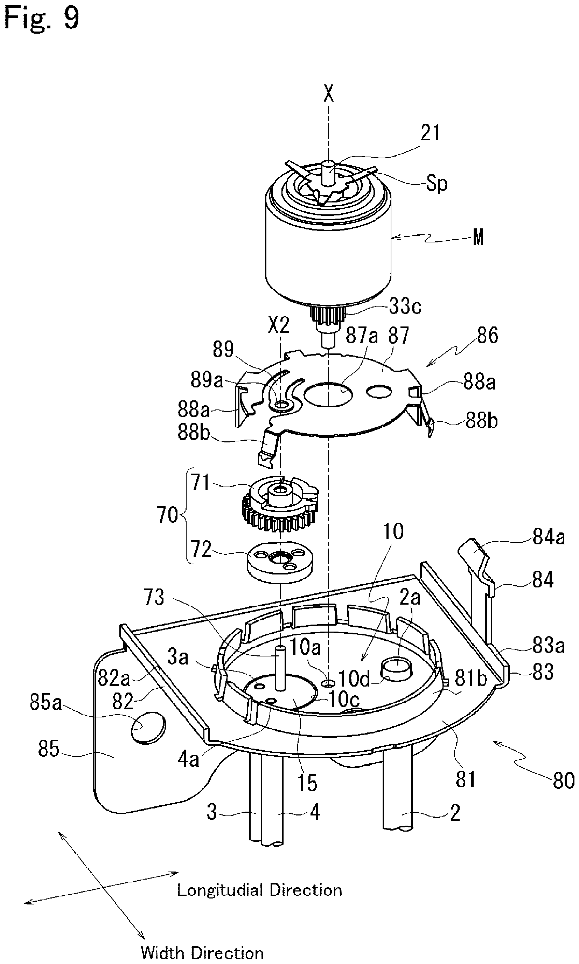

Fig. 9 is an exploded perspective view showing the lower cover member 80, the valve part 70, a table member 86 and the motor M in the valve drive device 1.

The valve part 70 of the valve drive device 1 is a member which is rotationally driven by the motor M around the axial line X2 (see Fig. 9) of a center axial direction of a shaft member 73 described below whose cross section is a bar shape. The valve part 70 includes a gear 71 and a valve body 72.

The gear 71 is an external gear meshing with the teeth part 33c provided on an outer periphery of the transmission shaft 33 of the motor M.

The valve body 72 is a member formed in a substantially circular plate shape. A center of the valve body 72 is formed with a circular hole part and a bottom face of the valve body 72 is formed with a cut-out part. A portion of the bottom face of the valve body 72 where the cut-out part is not formed is structured to be capable of closing openings 3a and 4a of the fluid lead-out pipes 3 and 4 (see Fig. 9).

A connection member 15 is fitted and attached to a through hole 10c provided in the bottom plate part 10 from a lower side (fluid lead-out pipes 3 and 4 side) on an opposite side to the motor M.

A center part of the connection member 15 is formed with a hole part 15a for supporting the shaft member 73, which is a bar-shaped member whose cross-sectional shape in an axial direction is substantially circular, so as to be opened toward the fluid chamber S. In the connection member 15, an opening 3a of the fluid lead-out pipe 3 and an opening 4a of the fluid lead-out pipe 4 are located at positions to an outer side in the radial direction of the hole part 15a (see Fig. 9).

The fluid lead-out pipes 3 and 4 are respectively provided so as to penetrate through the connection member 15 in the axial line X direction and are in communication with the fluid chamber S formed on an upper side (rotor 30 side) of the bottom plate part 10.

In the bottom plate part 10, a through hole 10d is provided at a position on an opposite side to the through hole 10c interposing the center hole part 10a and a fluid lead-in pipe 2 is fitted to the through hole 10d. In this state, the opening 2a of the fluid lead-in pipe 2 is opened in the fluid chamber S and the fluid lead-in pipe 2 is in communication with the fluid chamber S.

As shown in Fig. 9, the table member 86 is placed on an upper face 10b of the bottom plate part 10 (see Fig. 1). The table member 86 is structured so as to provide with a table part 87 and a plurality of leg parts 88 (88a and 88b) which are extended to a lower side (fluid lead-out pipes 3 and 4 side) from a peripheral edge part of the table part 87.

The table part 87 is formed with a hole part 87a for passing the transmission shaft 33 at its center part. An arm part 89 having a support hole 89a is provided to an outer side in a radial direction of the hole part 87a along a circumferential direction around the axial line X.

In this embodiment, when the partition 20 is fixed to the bottom plate part 10, the circular plate part 203 of the partition 20 is abutted with the table part 87 to press it to a lower side on the bottom plate part 10 side (fluid lead-out pipes 3 and 4 side) to a position where the leg parts 88a are abutted with the bottom plate part 10.

In this case, the leg part 88b is provided so as to protrude to an outer side in the radial direction relative to the leg part 88a and thus the table member 86 is held in an inside of the partition 20 in a state that the leg parts 88b are pressed against an inner periphery of the large diameter part 202 of the partition 20.

The arm part 89 is capable of deforming in an axial direction independently from the table part 87 and, when the table member 86 is pressed to a lower side on the bottom plate part 10 side (fluid lead-out pipes 3 and 4 side), the arm part 89 urges the valve body 72 to a lower side on the bottom plate part 10 side (fluid lead-out pipes 3 and 4 side). Further, the support hole 89a of the arm part 89 is externally engaged and positioned by the shaft member 73 of the valve part 70. Therefore, the valve body 72 of the valve part 70 is always abutted with an upper face (face on the rotor 30 side) of the bottom plate part 10 by the arm part 89 and is positioned in the axial direction.

As shown in Fig. 2, the lower cover member 80 is externally fitted and fixed to the large diameter part 202 of the partition 20 which is fixed to an upper face (face on the rotor 30 side) of the bottom plate part 10.

The lower cover member 80 is provided with an opening 81a into which the large diameter part 202 of the partition 20 is inserted at a center of the plate-shaped base part 81. An abutting piece 81b which is stood up toward an upper side in the axial line X direction is formed on an inner peripheral edge of the opening 81a at a plurality of positions in a circumferential direction around the axial line X.

Each of the abutting pieces 81b is protruded toward the axial line X side from the opening 81a and is capable of elastically deforming to an outer side in the radial direction for the axial line X.

Therefore, when the lower cover member 80 is to be externally fitted and attached to the large diameter part 202 of the partition 20, the large diameter part 202 is inserted into the opening 81a of the base part 81 while expanding the abutting pieces 81b to an outer side in the radial direction and the lower cover member 80 is fixed to the partition 20.

As shown in Fig. 9, an attaching part 85 which is formed by bending toward a lower side in the axial line X direction (fluid lead-out pipes 3 and 4 side) is provided on one side in a width direction of the base part 81. The attaching part 85 is provided for attaching the valve drive device 1 to a refrigerator, which is an external structure, and is provided over the total length in a longitudinal direction of the base part 81. The attaching part 85 is formed with hole parts 85a into which a screw or the like is inserted. The hole parts 85a are located on outer sides in the radial direction relative to the fluid lead-in pipe 2 and the fluid lead-out pipe 3 in the radial direction for the axial line X in Fig. 1 where the attaching part 85 is viewed from a front face for avoiding an interference with the fluid lead-in pipe 2 and the fluid lead-out pipe 3.

As shown in Fig. 9, reinforcing walls 82 and 83 which are formed by bending toward an upper side in the axial line X direction are provided on both sides in a longitudinal direction of the base part 81. The reinforcing walls 82 and 83 are respectively provided over a total length in a width direction of the base part 81 and the upper cover member 90 (see Fig. 3) is placed on upper ends 82a and 83a of the reinforcing walls.

In this embodiment, as shown in Figs. 1 and 3, the coil terminals 56 are located to an upper side (cover member 90 side) of the reinforcing wall 82 and the reinforcing wall 83 on the other side is provided with an engaging arm 84 for holding the lower cover member 80 and the upper cover member 90 in an engaging state.

The engaging arm 84 in the reinforcing wall 83 is provided so as to be extended from a substantially center part in the width direction in a direction separated from the base part 81 (upper side), and an engaging part 84a is provided on an upper end side of the engaging arm 84 so as to protrude to the axial line X side.

The engaging part 84a is engaged with an engaged part 922 of the upper cover member 90 when the upper cover member 90 is externally fitted and attached to the stator core 59 of the motor M and thereby coming-off of the upper cover member 90 from the lower cover member 80 is prevented.

In the lower cover member 80 in this embodiment, the reinforcing walls 82 and 83 are bent in an opposite direction (upper direction) to a bending direction (lower direction) of the attaching part 85 in the axial direction of the axial line X and flexural rigidity of the base part 81 of the lower cover member 80 is increased.

This is because that, when the lower cover member 80 is to be externally fitted (press fit) and attached to the large diameter part 202 of the partition 20, although the large diameter part 202 is inserted into the opening 81a of the base part 81 while expanding the abutting pieces 81b to an outer side in the radial direction, the lower cover member 80 can be fixed to the partition 20 and the base part 81 is restrained from being largely deformed due to its stress.

In this embodiment, in the lower cover member 80, the reinforcing walls 82 and 83 on both sides in its longitudinal direction are respectively bent in the same upper direction and thus, when the reinforcing walls 82 and 83 and the attaching part 85 are to be formed by bending, the bending work can be easily performed in comparison with a case that the reinforcing walls 82 and 83 are bent in different directions from each other (upper and lower directions) in the axial direction of the axial line X.

As described above, in accordance with an embodiment of the present invention;
(1) In a motor in which the coil terminals 56 extended from the stator assembly 40 (stator) which surrounds the rotor 30 are connected with the connector terminals 61 supported by the terminal support part 940 made of resin through the plate-shaped circuit board 60 (wiring member) having flexibility and,
   in the connected part (the other end part 60b) of the connector terminals 61 with the circuit board 60, the connector terminals 61 protruded from the terminal support part 940 are penetrated through the circuit board 60 which is contacted with the terminal support part 940 and are connected with a face of the circuit board 60 on an opposite side to the terminal support part 940 by soldering, the heat insulation member 946 having an insulation property is provided between the terminal support part 940 and the circuit board 60.

According to this structure, the heat insulation member 946 having an insulation property is provided between the terminal support part 940 and the circuit board 60. Therefore, the terminal support part 940 can be suppressed from being affected by soldering heat when the connector terminals 61 and the circuit board 60 are connected with each other.

As a result, the terminal support part 940 can be prevented from being melted and damaged by soldering heat and the connector terminals 61 can be prevented from being inclined to cause disconnection of the connector terminals 61 with a mating member not shown due to melting of the terminal support part 940.

(2) The upper cover member 90 (main body cover) made of resin having the surrounding wall part 92 (peripheral wall) which surrounds an outer periphery of the stator assembly 40 is integrally formed with the connector cover part 93 (connector cover) made of resin which is located on an outer side in the radial direction of the surrounding wall part 92, and the terminal support part 940 is integrally formed with the connector cover part 93.

In a case that the terminal support part 940 is structured of heat-resistant material so that the terminal support part 940 does not melt due to influence of soldering heat, when the terminal support part 940 is integrally formed with the upper cover member 90 and the connector cover part 93, these are also required to be structured of heat-resistant material.

In the case structured as described above, the terminal support part 940 is not required to be structured of heat-resistant material. Therefore, the upper cover member 90 and the connector cover part 93 which originally require no heat resistance are not required to be formed of resin having heat resistance. Accordingly, flexibility of resin material is improved and a manufacturing cost for providing with heat resistance is not required.

(3) The surrounding wall part 92 is provided with the opening part 92a for communicating an inner side of the cover part 91 with the inner side of the connector cover part 93, and the coil terminals 56 extended to an outer side in the radial direction of the stator assembly 40 through the opening part 92a are connected with the connector terminals 61 extended in the rotation axis direction of the rotor 30 (axial line X direction) on an inner side of the connector cover part 93 through the circuit board 60, and the connector cover part 93 is provided with the opening 930 through which the circuit board 60 can be visually observed from an outer side in the radial direction, and the terminal support part 940 is protruded in the rotation axis direction in the opening 930 when viewed from an outer side in the radial direction and the side edge 940c (side face) on an outer side in the radial direction of the terminal support part 940 can be visually observed.

According to this structure, the support face 940b of the terminal support part 940 to which the circuit board 60 is to be contacted is protruded in an inside of the opening 930 of the connector cover part 93 and thus the heat insulation member 946 can be easily attached to the support face 940b.

Further, in a case that the heat insulation member 946 is separately provided, a working cost may be increased. However, the heat insulation member 946 can be easily attached and thus increase of a working cost can be suppressed.

(4) The connector cover part 93 is attachably and detachably provided with the cap 96 for closing the opening 930, and the opening 930 in the connector cover part 93 is opened on an outer side in the radial direction of opening part 92a provided in the surrounding wall part 92, and the outer sides in the radial direction of the coil terminals 56, the connector terminals 61 and the circuit board 60 are covered by the surrounding wall part 92, the connector cover part 93 and the cap 96.

According to this structure, the connected parts of the circuit board 60 with the coil terminals 56 and the connector terminals 61 can be visually observed in an inside of the opening 930. Therefore, connecting work by soldering of the circuit board 60 with the coil terminals 56 and the connector terminals 61 can be performed easily.

(5) The inner wall part 944 (wall part) extended in the rotation axis direction along the connector terminals 61 is provided on an inner diameter side of the terminal support part 940, and the inner wall part 944 is located to an outer side in the radial direction relative to the coil terminals 56 when viewed in the rotation axis direction and, in a case that the upper cover member 90 and the stator assembly 40 are to be assembled, a space for passing the coil terminals 56 is formed on an inner diameter side of the inner wall part 944 in an inner side of the connector cover part 93.

According to this structure, a space is provided on an inner diameter side of the inner wall part 944 and thus, when viewed in the axial direction of the stator assembly 40, the coil terminals 56 and the inner wall part 944 are not overlapped with each other. Therefore, when the upper cover member 90 and the stator assembly 40 are to be assembled, the coil terminals 56 extended to an outer side in the radial direction from the stator assembly 40 are not interfered with the inner wall part 944. As a result, the upper cover member 90 and the stator assembly 40 can be surely assembled.

(6) In an inside of the connector cover part 93, the coil terminals 56 and the connector terminals 61 are connected with each other through the curved circuit board 60, and the space on an inner diameter side of the inner wall part 944 is formed so that the circuit board 60 whose one end side in its longitudinal direction is connected with the coil terminals 56 is capable of passing, and the cut-out part 944a is provided in the inner wall part 944 and a side edge (inclined face 940a) on an inner diameter side of the terminal support part 940 is exposed in an inside of the cut-out part 944a.

According to this structure, after the upper cover member 90 and the stator assembly 40 have been assembled, the circuit board 60 connected with the coil terminals 56 is curved to an outer side in the radial direction and the other end part 60b side of the circuit board 60 is connected with the connector terminals 61.

In this case, when the cut-out part 944a is provided in the inner wall part 944 and the side edge is exposed to an inner diameter side of the terminal support part 940, a spatial margin is increased on an inner side of the connector cover part 93 and on an inner diameter side of the terminal support part 940 and thus, when the circuit board 60 is to be curved, connecting work of the circuit board 60 with the connector terminals 61 can be performed easily.

(7) The width Wc in the radial direction of the heat insulation member 946 is narrower than the width Wd in the radial direction of the terminal support part 940, and the side face 946b on an inner diameter side of the heat insulation member 946 is located to an outer side in the radial direction by a predetermined distance We relative to a side edge on an inner diameter side of the terminal support part 940.

In a case that, after the upper cover member 90 and the stator assembly 40 have been assembled each other, the other end part 60b side of the circuit board 60 is curved to an outer side in the radial direction and the terminal holes 601 (see Fig. 3) provided in the other end part 60b are engaged with the connector terminals 61 which are protruded from an upper face (support face 940b) of the terminal support part 940 to an upper side (coil terminals 56 side), the other end part 60b of the circuit board 60 may be caught by the heat insulation member 946, resulting in a risk that the heat insulation member 946 supported on the support face 940b is come off.

According to the structure as described above, the other end part 60b of the circuit board 60 can be preferably prevented from being caught by the heat insulation member 946 and thus the heat insulation member 946 supported by the support face 940b is prevented from coming off.

(8) The connected part of the circuit board 60 with the connector terminals 61 and the connected part of the circuit board 60 with the coil terminals 56 are provided at positions offset in the rotation axis direction of the rotor 30 (in the axial direction of the axial line X).

According to this structure, a space for passing the circuit board 60 can be secured widely and thus connection of the circuit board 60 with the coil terminals 56 and the connector terminals 61 can be performed easily.

(9) The heat insulation member 946 is formed with the through-hole 946a which penetrates through in the thickness direction of the heat insulation member 946 for passing the connector terminal 61, the circuit board 60 (wiring member) is formed with the terminal hole 601 on its one side which penetrates through in the thickness direction of the circuit board 60 for passing the connector terminal 61, and the inner diameter d1 of the through-hole 946a formed in the heat insulation member 946 is smaller than the outer diameter d2 of the land 601A around the terminal hole 601 formed in the circuit board 60 (d1 < d2).

According to this structure, in a case that the connector terminal 61 and the terminal hole 601 of the circuit board 60 are to be soldered each other, even when the land 601A surrounding the terminal hole 601 is pressed in the heat insulation member 946 direction by a soldering iron not shown, the land 601A does not enter into the inner side of the through-hole 946a of the heat insulation member 946. Therefore, the circuit board 60 can be prevented from contacting with the terminal support part 940 and soldering heat can be preferably prevented from being directly transmitted to the terminal support part 940.

(10) A melting temperature of the heat insulation member 946 is higher than a melting temperature of the terminal support part 940 made of resin.

According to this structure, when the connector terminal 61 and the terminal hole 601 of the circuit board 60 are to be soldered each other, the heat insulation member 946 can be prevented from being melted by soldering heat. Specifically, the terminal support part 940 can be preferably prevented from being melted due to the heat insulation member 946 having been melted by soldering heat to decrease its thickness and to narrow a distance between the soldering heat source and the terminal support part 940.

(11) The stator assembly 40 further includes the bobbin 53 and the drive coil 54 wound around an outer periphery of the bobbin 53, and an end part of a winding coil extended from the drive coil 54 is soldered (bound) at a position on an inner side in the radial direction relative to a position where the circuit board 60 and the coil terminal 56 are soldered to each other in the coil terminal 56 supported in the terminal holding part 55A provided in the bobbin 53.

According to this structure, the position where an end part of a winding coil extended from the drive coil 54 is bound is located on an inner side in the radial direction relative to the position where the circuit board 60 is soldered to the coil terminal 56 and thus the circuit board 60 is soldered to the coil terminal 56 at a position separated by a constant distance from the terminal holding part 55A.

Although the present invention has been shown and described with reference to a specific embodiment, various changes and modifications will be apparent to those skilled in the art from the teachings herein. For example, the valve drive device in accordance with the present invention may be applied to a flow passage for fluid other than refrigerant in a refrigerator and may be appropriately modified to a structure for opening and closing a valve by the valve body 72.

### [Reference Signs List]

- 1: valve drive device
- 2: fluid lead-in pipe
- 3, 4: fluid lead-out pipe
- 40: stator assembly
- 50A: stator assembly
- 50B: stator assembly
- 51, 52: inner stator core
- 54: coil
- 55: terminal holding part
- 56a: coil terminal
- 59: outer stator core
- 60: circuit board (circuit board)
- 61: connector terminal
- 65: coil terminal
- 90: upper cover member
- 91: cover part
- 92: surrounding wall part
- 92a: opening part
- 93: connector cover part
- 94: connector part
- 95: accommodation part
- 96: cap
- 97: wall part
- 98: fitting wall part
- 940: terminal support part
- 940a: taper part
- 940b: support face
- 940c: side edge
- 941: surrounding wall part
- 942: side wall part
- 943: outer wall part
- 943a: upper end
- 944: inner wall part
- 945: connecting beam
- 945a: inclined face
- 955: inner side fitting wall part

## Claims

1. A motor (M), in which a coil terminal (56) extended from a stator (40) surrounding a rotor (30) is connected with a connector terminal (61) supported by a terminal support part (940) made of resin through a wiring member (60) in a plate shape having flexibility, the wiring member (60) being formed with a terminal hole (601) through which the connector terminal (61) is penetrating in a thickness direction of the wiring member (60) and a land (601A) which is provided on an opposite side to the terminal support part (940) so as to surround the terminal hole (601) and, in a connected part of the connector terminal (61) with the wiring member (60), the connector terminal (61) protruded from the terminal support part (940) penetrates through the wiring member (60) and is connected by soldering the land (601A) on the wiring member (60) on the opposite side to the terminal support part (940),
the motor (M) **characterized in that**:
a heat insulation member (946) having an insulation property is provided between the terminal support part (940) and the wiring member (60), the heat insulation member (946) being used to prevent soldering heat from being applied to the terminal support part (940) when the connector terminal (61) and the wiring member (60) are connected with each other,
the heat insulation member (946) is formed with a through-hole (946a) through which the connector terminal (61) is penetrating in a thickness direction of the heat insulation member (946), and
an inner diameter (d1) of the through-hole (946a) of the heat insulation member (946) is smaller than an outer diameter (d2) of the land (601A) with the terminal hole (601) as a center so that the land (601A) does not enter into an inner side of the through-hole (946a) of the heat insulation member (946) when the connector terminal (61) is connected with the wiring member (60) by soldering.

2. The motor (M) according to claim 1, wherein
a main body cover (90) made of resin having a peripheral wall (92) which surrounds an outer periphery of the stator (40) is integrally formed with a connector cover (93) made of resin which is located to an outer side in a radial direction of the peripheral wall (92), and
the terminal support part (940) is integrally formed with the connector cover (93).

3. The motor (M) according to claim 2, wherein
the peripheral wall (92) is provided with an opening part (92a) for communicating an inner side of the main body cover (91) with an inner side of the connector cover (93),
the coil terminal (56) extended to an outer side in the radial direction of the stator (40) through the opening part (92a) is connected with the connector terminal (61) extending in a rotation axis direction of the rotor (30) on the inner side of the connector cover (93) through the wiring member (60),
the connector cover (93) is provided with an opening (930) through which the wiring member (60) is capable of being visually observed from an outer side in the radial direction, and
the terminal support part (940) is protruded in the rotation axis direction in an inside of the opening (930) when viewed from the outer side in the radial direction and thereby a side face (940c) on the outer side in the radial direction of the terminal support part (940) is capable of being visually observed.

4. The motor (M) according to claim 3, wherein
the connector cover (93) is attachably and detachably provided with a cap (96) for closing the opening (930),
the opening (930) in the connector cover (93) is opened on an outer side in the radial direction of the opening part (92a), and
outer sides in the radial direction of the coil terminal (56), the connector terminal (61) and the wiring member (60) are covered by the peripheral wall (92), the connector cover (93) and the cap (96).

5. The motor (M) according to one of claims 2 through 4, wherein
a wall part (944) extended in the rotation axis direction along the connector terminal (61) is provided on an inner diameter side of the terminal support part (940),
the wall part (944) is located on an outer side in the radial direction relative to the coil terminal (56) when viewed in the rotation axis direction, and
when the main body cover (90) and the stator (40) are to be assembled, a space for passing the coil terminal (56) is formed on an inner diameter side of the wall part (944) on an inner side of the connector cover (93).

6. The motor (M) according to claim 5, wherein
the coil terminal (56) and the connector terminal (61) are connected with each other through the wiring member (60) having been curved in an inside of the connector cover (93),
the space is formed so that the wiring member (60) whose one end side in its longitudinal direction is connected with the coil terminal (56) is capable of being passed, and
a cut-out part (944a) is provided in the wall part (944) and a side edge (940a) on an inner diameter side of the terminal support part (940) is exposed in the cut-out part (944a).

7. The motor (M) according to claim 5 or 6, wherein
a width (Wc) in the radial direction of the heat insulation member (946) is set to be narrower than a width (Wd) in the radial direction of the terminal support part (940), and
a side edge (946b) on an inner diameter side of the heat insulation member (946) is located on an outer side in the radial direction relative to a side edge on the inner diameter side of the terminal support part (940).

8. The motor (M) according to one of claims 5 through 7, wherein
a connected part of the wiring member (60) with the connector terminal (61) and a connected part of the wiring member (60) with the coil terminal (56) are provided at positions offset in a rotation axis direction of the rotor (30).

9. The motor (M) according to one of claims 1 through 8, wherein
a melting temperature of the heat insulation member (946) is higher than a melting temperature of the terminal support part (940) made of resin.

10. The motor (M) according to one of claims 5 through 8, wherein
the coil terminal (56) is supported by a terminal holding part (55A) provided in the stator (40), and
a winding wire extended from a coil (54) is bound around the coil terminal (56) on a terminal holding part (55A) side relative to a soldered part of the wiring member (60) to the coil terminal (56).

## Patentansprüche

1. Motor (M), in welchem ein Spulenanschluss (56), der sich von einem Stator (40) erstreckt, der einen Rotor (30) umgibt, mit einem Steckeranschluss (61) verbunden ist, der durch einen Anschlusstragteil (940) gestützt ist, der aus Harz durch ein Verdrahtungselement (60) in einer Plattenform, die Flexibilität aufweist, hergestellt wird,
wobei das Verdrahtungselement (60) mit einem Anschlussloch (601), durch welches der Verbindungsanschluss (61) in eine Dickenrichtung des Verdrahtungselements (60) eindringt und ein Steg (601 A) ausgebildet ist, welcher auf einer gegenüberliegenden Seite zu dem Anschlusstragteil (940) bereitgestellt ist, um das Anschlussloch (601) zu umgeben und, in einem verbundenen Teil des Verbindungsanschlusses (61) mit dem Verdrahtungselement (60), der Verbindungsanschluss (61), der von dem Anschlusstragteil (940) vorsteht, das Verdrahtungselement (60) durchdringt und durch Löten des Stegs (601A) an dem Verdrahtungselement (60) auf der dem Anschlusstragteil (940) gegenüberliegenden Seite verbunden ist,
wobei der Motor (M) **dadurch gekennzeichnet ist,**
**dass** ein Wärmeisolationselement (946) mit einer Isoliereigenschaft zwischen dem Anschlusstragteil (940) und dem Verdrahtungselement (60) vorgesehen ist,
wobei das Wärmeisolationselement (946) verwendet wird, um zu verhindern, dass Lötwärme auf das Anschlusstragteil (940) angewendet wird, wenn der Verbindungsanschluss (61) und das Verdrahtungselement (60) miteinander verbunden werden,
das Wärmeisolationselement (946) mit einem Durchgangsloch (946a) ausgebildet ist, durch das der Verbindungsanschluss (61) in eine Dickenrichtung des Wärmeisolationselements (946) dringt;
und ein Innendurchmesser (d1) des Durchgangslochs (946a) des Wärmeisolationselements (946) kleiner als ein Außendurchmesser (d2) des Stegs (601A) mit dem Anschlussloch (601) als Zentrum ist, so dass der Steg (601A) nicht in eine Innenseite des Durchgangslochs (946a) des Wärmeisolationselements (946) eintritt, wenn der Verbindungsanschluss (61) mit dem Verdrahtungselement (60) durch Löten verbunden wird.

2. Motor (M) gemäß Anspruch 1, wobei eine Hauptkörperabdeckung (90), die aus einem Harz hergestellt ist, eine Umfangswand (92) aufweist, die einen Außenumfang des Stators (40) umgibt, integral mit einer Verbindungsabdeckung (93), die aus einem Harz hergestellt ist, ausgebildet ist, die an einer Außenseite in eine radiale Richtung der Umfangswand (92) angeordnet ist und der Anschlusstragteil (940) integral mit der Verbindungsabdeckung (93) ausgebildet ist.

3. Motor (M) gemäß Anspruch 2, wobei
die Umfangswand (92) mit einem Öffnungsteil (92a) versehen ist, zur Kommunikation einer Innenseite der Hauptkörperabdeckung (91) mit einer Innenseite der Verbindungsabdeckung (93) zu übermitteln,
wobei der Spulenanschluss (56), der sich zu einer Außenseite in die radiale Richtung des Stators (40) durch den Öffnungsteil (92a) erstreckt, mit dem Verbindungsanschluss (61) verbunden ist, der sich in einer Drehachsenrichtung des Rotors (30) auf die Innenseite der Verbindungsabdeckung (93) durch das Verdrahtungselement (60) erstreckt,
wobei die Verbindungsabdeckung (93) mit einer Öffnung (930) versehen ist, durch die das Verdrahtungselement (60) in radialer Richtung von einer Außenseite aus betrachtet werden kann und der Anschlusstragteil (940) in der Rotationsachsenrichtung in eine Innenseite der Öffnung (930) ragt, wenn von der Außenseite in radialer Richtung betrachtet, und dadurch eine Seitenfläche (940c) an der Außenseite in der radialen Richtung von dem Anschlusstragteil (940) visuell beobachtet werden kann.

4. Motor (M) gemäß Anspruch 3, wobei
die Steckerabdeckung (93) anbringbar und lösbar mit einer Kappe (96) zum Schließen der Öffnung (930) versehen ist.
die Öffnung (930) in der Verbindungsabdeckung (93) an einer Außenseite in radialer Richtung des Öffnungsteils (92a) geöffnet ist und die
Außenseiten in radialer Richtung des Spulenanschlusses (56), des Verbindungsanschlusses (61) und des Verdrahtungselements (60) durch die Umfangswand (92), die Verbindungsabdeckung (93) und die Kappe (96) abgedeckt sind.

5. Motor (M) gemäß irgendeinem der Ansprüche 2 bis 4, wobei
ein Wandteil (944), das sich in der Drehachsenrichtung entlang des Verbindungsanschlusses (61) erstreckt, an einer Innendurchmesserseite des Anschlusstragabschnitts (940) vorgesehen ist,
wobei der Wandteil (944) an einer Außenseite in die radiale Richtung relativ zu dem Spulenanschluss (56), wenn in der Richtung der Drehachse gesehen, angeordnet ist, und wenn die Hauptkörperabdeckung (90) und der Stator (40) zusammenzubauen sind, ein Raum zum Hindurchführen des Spulenanschlusses (56) an einer Innendurchmesserseite des Wandteils (944) an einer Innenseite der Verbindungsabdeckung (93) ausgebildet ist.

6. Motor (M) gemäß Anspruch 5, wobei
der Spulenanschluss (56) und der Verbindungsanschluss (61) miteinander durch das Verdrahtungselement (60) verbunden sind, das im Inneren der Verbindungsabdeckung (93) gekrümmt ist,
wobei der Raum so ausgebildet ist, dass das Verdrahtungselement (60), dessen eines Ende in seiner Längsrichtung mit dem Spulenanschluss (56) verbunden ist, durchlaufen werden kann,
und
ein Aussparungsteil (944a) in dem Wandteil (944) vorgesehen ist, und eine Seitenkante (940a) an einer Innendurchmesserseite des Anschlusstragteils (940) in dem Aussparungsteil (944a) freiliegt.

7. Motor (M) gemäß Anspruch 5 oder 6,
wobei eine Breite (Wc) in der radialen Richtung des Wärmeisolationselements (946) so eingestellt ist, dass sie schmaler als eine Breite (Wd) in der radialen Richtung des Anschlusstragteils (940) ist,
und eine Seitenkante (946b) an einer Innendurchmesserseite des Wärmeisolationselements (946) an einer Außenseite in der radialen Richtung relativ zu einer Seitenkante an der Innendurchmesserseite des Anschlusstragteils (940) angeordnet ist.

8. Motor (M) gemäß irgendeinem der Ansprüche 5 bis 7, wobei ein mit dem Verbindungsanschluss (61) verbundener Teil des Verdrahtungselements (60) und ein mit dem Spulenanschluss (56) verbundener Teil des Verdrahtungselements (60) an Positionen vorgesehen sind, die in einer Drehachsenrichtung des Rotors (30) versetzt sind.

9. Motor (M) gemäß irgendeinem der Ansprüche 1 bis 8, wobei
eine Schmelztemperatur des Wärmeisolationselements (946) höher als eine Schmelztemperatur des Anschlusstragteils (940) ist, welches aus Harz hergestellt.

10. Motor (M) gemäß irgendeinem der Ansprüche 5 bis 8, wobei
der Spulenanschluss (56) von einem Anschlusshalteteil (55A) gestützt ist, der in dem Stator (40) vorgesehen ist,
und ein Wicklungsdraht, der sich von einer Spule (54) erstreckt, um den Spulenanschluss (56) an einer Seite des Anschlusshalteteils (55A) relativ zu einem gelöteten Teil des Verdrahtungselements (60) mit dem Spulenanschluss (56) zu umwickeln.

## Revendications

1. Moteur (M) dans lequel une borne de bobine (56) s'étendant depuis un stator (40) entourant un rotor (30) est connectée à une borne de bobine (61) supportée par une pièce support de borne (940) composée de résine à travers un élément de câblage (60) en forme de plaque doté de souplesse, l'élément de câblage (60) étant conformé avec un trou de borne (601) à travers lequel la borne de connecteur (61) pénètre dans un sens de l'épaisseur de l'élément de câblage (60) et un sol (601A) qui est prévu sur une face opposée à la pièce support de borne (940) de manière à entourer le trou de borne (601) et, dans une pièce de la borne de connecteur (61) connectée à l'élément de câblage (60), la borne de connecteur (61) saillant de la pièce support de borne (940) pénètre à travers l'élément de câblage (60) et est connectée en soudant le sol (601A) sur l'élément de câblage (60) sur la face opposée à la pièce support de borne (940), le moteur (M) étant **caractérisé en ce :**
**qu'**un élément d'isolation thermique (946) doté d'une propriété d'isolation est prévu entre la pièce support de borne (940) et l'élément de câblage (60), l'élément d'isolation thermique (946) étant utilisé pour éviter que de la chaleur de soudage soit appliquée sur la pièce support de borne (940) lorsque la borne de connecteur (61) et l'élément de câblage (60) sont connectés l'un à l'autre,
l'élément d'isolation thermique (946) est conformé avec un trou traversant (946a) à travers lequel la borne de connecteur (61) pénètre dans un sens de l'épaisseur de l'élément d'isolation thermique (946), et
un diamètre intérieur (d1) du trou traversant (946a) de l'élément d'isolation thermique (946) est inférieur à un diamètre extérieur (d2) du sol (601A), le trou terminal (601) faisant office de centre, de sorte que le sol (601A) ne rentre pas dans une face intérieure du trou traversant (946a) de l'élément d'isolation thermique (946) lorsque la borne de connecteur (61) est connectée à l'élément de câblage (60) par soudage.

2. Moteur (M) selon la revendication 1, dans lequel
un recouvrement de corps principal (90) composé de résine et doté d'une paroi périphérique (92) qui entoure une périphérie extérieure du stator (40) forme partie intégrante d'un recouvrement de connecteur (93) composé de résine qui se situe sur une face extérieure dans un sens radial de la paroi périphérique (92), et
la pièce support de borne (940) forme partie intégrante du recouvrement de connecteur (93).

3. Moteur (M) selon la revendication 2, dans lequel
la paroi périphérique (92) est pourvue d'une pièce d'ouverture (92a) pour faire communiquer une face intérieure du recouvrement de corps principal (91) avec une face intérieure du recouvrement de connecteur (93),
la borne de bobine (56) s'étendant vers une face extérieure dans le sens radial du stator (40) à travers la pièce d'ouverture (92a) est connectée à la borne de connecteur (61) s'étendant dans un sens de l'axe de rotation du rotor (30) sur la face intérieure du recouvrement de connecteur (93) à travers l'élément de câblage (60),
le recouvrement de connecteur (93) est pourvu d'une ouverture (930) à travers laquelle l'élément de câblage (60) peut être observé visuellement depuis une face extérieure dans le sens radial, et
la pièce support de borne (940) est saillante dans le sens de l'axe de rotation dans un intérieur de l'ouverture (930), vu depuis la face extérieure dans le sens radial, et une face latérale (940c) sur la face extérieure dans le sens radial de la pièce support de borne (940) peut ainsi être observée visuellement.

4. Moteur (M) selon la revendication 3, dans lequel
le recouvrement de connecteur (93) est pourvu, de manière à pouvoir être rattaché et détaché, d'un capuchon (96) pour fermer l'ouverture (930),
l'ouverture (930) dans le recouvrement de connecteur (93) est ouverte sur une face extérieure dans le sens radial de la pièce d'ouverture (92a), et
les faces extérieures dans le sens radial de la borne de bobine (56), de la borne de connecteur (61) et de l'élément de câblage (60) sont recouvertes par la paroi périphérique (92), le recouvrement de connecteur (93) et le capuchon (96).

5. Moteur (M) selon l'une quelconque des revendications 2 à 4, dans lequel
une pièce de cloison (944) s'étendant dans le sens de l'axe de rotation le long de la borne de connecteur (61) est prévue sur une face de diamètre intérieur de la pièce support de borne (940),
la pièce de cloison (944) se situe sur une face extérieure dans le sens radial par rapport à la borne de bobine (56), vue dans le sens de l'axe de rotation, et
lorsque le recouvrement de corps principal (90) et le stator (40) sont sur le point d'être assemblés, un espace permettant le passage de la borne de bobine (56) est formé sur une face de diamètre intérieur de la pièce de cloison (944) sur une face intérieure du recouvrement de connecteur (93).

6. Moteur (M) selon la revendication 5, dans lequel
la borne de bobine (56) et la borne de connecteur (61) sont connectées entre elles par l'élément de câblage (60) qui a été recourbé dans un intérieur du recouvrement de connecteur (93),
l'espace est formé de manière à ce que l'élément de câblage (60), dont une face terminale dans son sens longitudinal est connectée à la borne de bobine (56), puisse être passé, et
une pièce découpée (944a) est prévue dans la pièce de cloison (944) et un bord latéral (940a) sur une face de diamètre intérieur de la pièce support de borne (940) est exposé dans la pièce découpée (944a).

7. Moteur (M) selon la revendication 5 ou 6, dans lequel
une largeur (Wc) dans le sens radial de l'élément d'isolation thermique (946) est fixée de manière à être plus étroite qu'une largeur (Wd) dans le sens radial de la pièce support de borne (940), et
un bord latéral (946b) sur une face de diamètre intérieur de l'élément d'isolation thermique (946) est situé sur une face extérieure dans le sens radial par rapport à un bord latéral sur la face de diamètre intérieur de la pièce support de borne (940).

8. Moteur (M) selon l'une quelconque des revendications 5 à 7, dans lequel
une pièce de l'élément de câblage (60) connectée à la borne de connecteur (61) et une pièce de l'élément de câblage (60) connectée à la borne de bobine (56) sont prévues à des positions décalées dans un sens de l'axe de rotation du rotor (30).

9. Moteur (M) selon l'une quelconque des revendications 1 à 8, dans lequel
une température de fusion de l'élément d'isolation thermique (946) est supérieure à une température de fusion de la pièce support de borne (940) composée de résine.

10. Moteur (M) selon l'une quelconque des revendications 5 à 8, dans lequel
la borne de bobine (56) est supportée par une pièce de retenue de borne (55A) prévue dans le stator (40), et
un fil enroulé s'étendant depuis une bobine (54) est lié autour de la borne de bobine (56), sur une face de la pièce de retenue de borne (55A) terminale par rapport à une pièce soudée de l'élément de câblage (60), à la borne de bobine (56).
